# EUROPEAN PATENT SPECIFICATION

(11) **EP 2 223 796 B1**
(45) Date of publication and mention of the grant of the patent: **19.11.2014**
(21) Application number: 10153689.4
(22) Date of filing: 16.02.2010
(51) Int. Cl.: B32B 5/26, D04H 13/00

(54) **Elastic film laminates with tapered point bonds**
Elastische Filmlaminate mit konischen Punktverbindungen
Laminés de films élastiques avec liages par points coniques

(30) Priority: 24.02.2009 US 380156
(43) Date of publication of application: 01.09.2010
(73) Proprietor: Tredegar Film Products Corporation, Richmond, VA 23225 (US)
(72) Inventor: Frost, Eric, Mechanicsville, VA 23116 (US)
(74) Representative: Nederlandsch Octrooibureau

(56) References cited:
- EP-A1- 1 844 928
- EP-A2- 1 634 698
- WO-A1-98/28123
- WO-A1-2008/129138
- US-A- 4 035 219
- US-A- 4 259 399
- US-A1- 2002 144 384

## Description

### BACKGROUND OF THE DISCLOSURE

The disclosure relates to elastic film laminates, methods of manufacturing such laminates and articles incorporating same.

Elastic film laminates are used in the manufacture of many goods. In particular, elastic film laminates are used in the manufacture of absorbent articles, such as diapers, training pants adult incontinent articles, and similar articles. The elastic film laminates may be used, for example, as the waist band, leg cuffs, side tabs, side ears, side panels or as the shell of the article. Elastic film laminates also find use in other articles, such as garments, hats, gowns, coveralls, etc. and are typically used to provide desired fit characteristics to the article.

When a film or laminate is made in roll form, the material travels along a path known as the machine direction ("MD") beginning where the material is formed or unwound to the point where the finished web is wound on a roll. The machine direction will normally correspond to the longest dimension of the web. The cross direction ("CD") is a direction generally perpendicular to the machine direction and will typically correspond to the width of the web. A number of elastic films and laminates have been proposed, but the vast majority of such films and laminates are engineered and constructed to provide stretch in the cross direction ("CD").

There remains a need for laminates that have improved softness and hand without sacrificing strength or bond quality.

International patent publication WO2008/129138 discloses a nonwoven fabric having a specific bond pattern. This document is concerned with bonding the fibres together in the nonwoven fabric, not with bonding a nonwoven fabric to an elastic film. The transition region between the bonded region and the non bonded region should be at least 10% and as much as 100% of the bond area. European patent application EP-A-1 844 928 discloses a laminate having an elastic film and a nonwoven fabric ultrasonically bonded to each side of the film.

### SUMMARY OF THE DISCLOSURE

In one embodiment, a laminate is provided as defined in claim 1. In a further aspect, a method is provided as defined in claim 10. These and other aspects of the disclosure will become apparent upon a further reading of the specification with reference to the drawing figures and the appended claims.

### BRIEF DESCRIPTION OF THE DRAWINGS

Figure 1 is a cross sectioned view of a prior art laminate, particularly illustrating an ultrasonic bond point.
Figure 2 is a plan view of a prior art laminate, particularly illustrating an ultrasonic bond point.
Figure 3 is a cross sectioned view of an elastic laminate in accordance with the disclosure and particularly illustrating the ultrasonic bond points.
Figure 4 is a graph showing a peak tensile comparison between the novel laminates and prior art laminates when stretched in the machine direction.
Figure 5 is a graph showing a peak tensile comparison between the novel laminates and prior art laminates when stretched in the cross or transverse direction, similar to that of Figure 4.

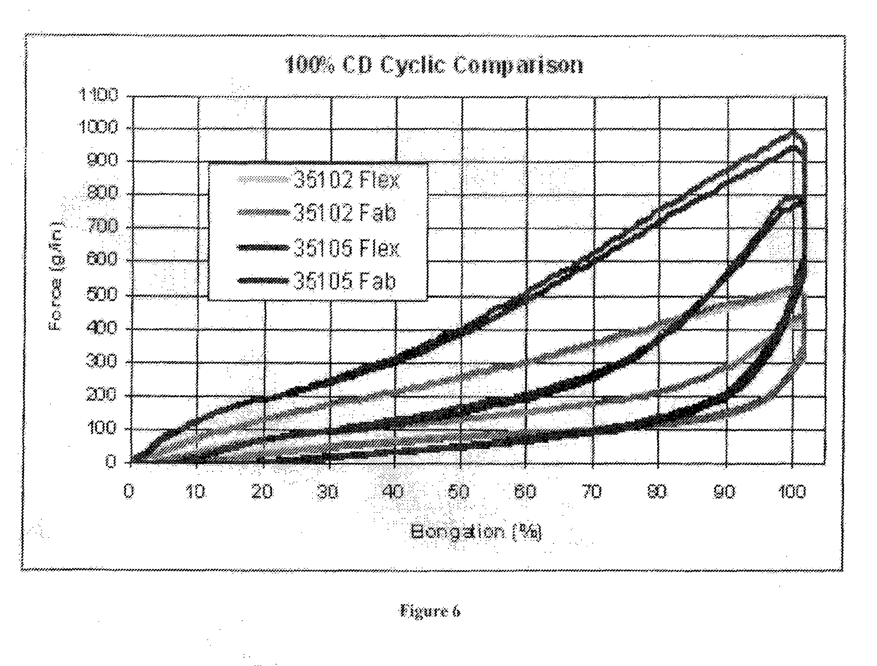

Figure 6 is a series of stress-strain curves for the novel laminates and the prior art laminates mentioned in the example section of the disclosure at 100% elongation in the cross-direction.

### DETAILED DESCRIPTION OF THE EMBODIMENTS

Conventional laminates are prepared by an of a number of different lamination methods, including thermal lamination, adhesive lamination, vacuum lamination, extrusion coating, ultrasonic bonding, and combinations thereof, as well as other methods known in the art. Ultrasonic bonding is known as a "point bonding method", wherein the layers of the laminate are attached together at discrete, spaced-apart locations or "points."

Ultrasonic bonding is a non-contact bonding method in which the unbounded laminate layers are passed between an ultrasonic horn and a patterned anvil. The anvil can be a flat, plate-like member or a cylindrical roll and has a series or pattern of raised elements located thereon. The cross sectional shape of the projection can be flat or rounded. The ultrasonic horn is vibrating at high frequency, generating a sound wave. As the unbounded webs pass under the horn, the sound wave generates heat and pressure, fusing the webs together. The bond points thus form in the gap formed between the horn and the raised portion of the anvil roll.

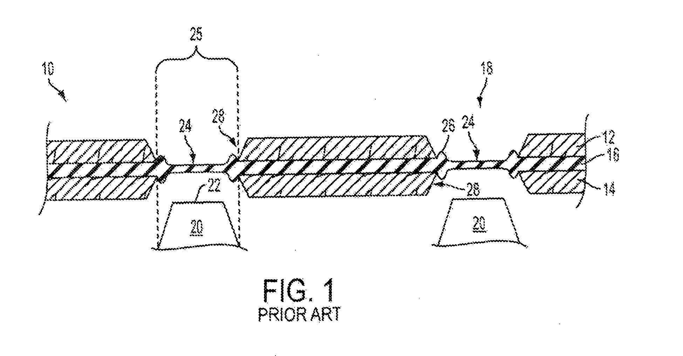

With reference first being made to Figure 1, illustrated therein is cross section of a prior art ultrasonic bonded elastic laminate. The laminate 10 has a first nonwoven web 12, a second nonwoven web 14 and an elastic film 16 sandwiched between the first and second nonwoven webs 12, 14. The individual layers of the laminate are bonded together by a plurality of ultrasonic bind points 18.

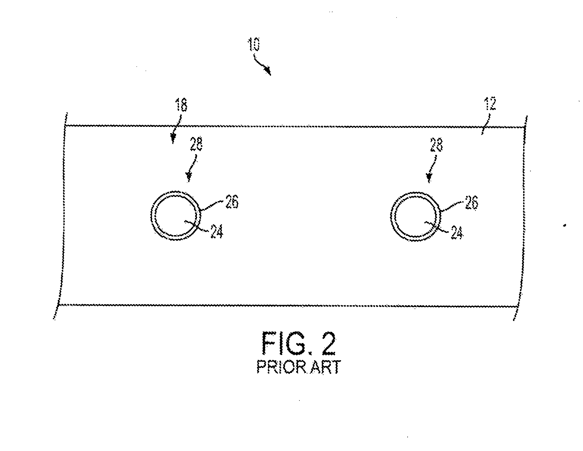

The bond points 18 of the prior art laminates are made using an anvil roll having a plurality of nibs 20 with a substantially flat top section 22 as seen in Figure 1. As seen in Figure 2, the bond points 18 are generally circular in shape when viewed from above (or below) the laminate. As seen in Figure 1, the flat top nips 20 on the anvil roll (not shown) results in bond points 18 that have a relatively large flat land area 24 that occupies substantially all of the bond area 25 of the individual bond point 18. More specifically, the cumulative bond area of prior art laminates is approximately 7.0-7.3% of the total area of the laminate and greater than 90% of that bond area is flat land area. Stated differently, approximately 6.3-6.6% of the total laminate area comprises flat land areas.

The use of the flat top nibs 20 also results in molten polymer material from the film 16 and/or the nonwovens layers 12, 14 being forced to the edges of the bond area. As that polymeric material cools, it forms a protuberance in the bond point. In most instances, the protuberance is in the form of a circumferential ridge or flange 26 around the bond point. However, it should be understood that the protuberance can take any number of forms as the polymer is pushed to the outer edge of the bond. Generally, the protuberance is any imperfection having a greater thickness than the nominal thickness of the film.

The flat top nibs 20 also result in a rather sharp transition 28 between the nonwoven layers 12, 14 and the bond point 18. The transition 28 creates steep sides portions between the surfaces of the nonwoven webs 12, 14 and the bond point 18. These three attributes: the large flat land area 24, the circumferential ridge 26 and the sharp transition area 28, all cooperate to product a laminate that has a noticeable stiffness or harshness as it is stroked by a consumer or user. Specifically, the tactile sensation upon stroking the laminate is one where the consumer notices a distinct bump feeling upon crossing a bond point, which the consumer would perceive as harsh or rigid. Because the laminates are often used in skin-contacting applications such as side panels in pull-on style diapers, the perception of harshness or rigidity or stiffness is detrimental. Applicants have discovered that by lowering the flat land area in the bond point, the resulting laminates have a much improved softness and better tactile feel compared to laminates having a higher flat land bond area.

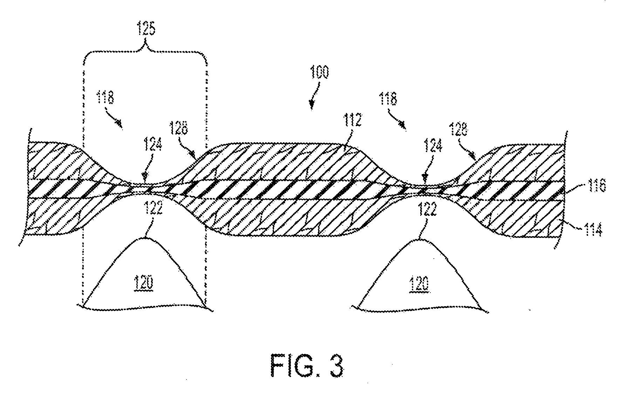

With particular reference to Figure 3, the novel laminate 110 comprises an elastic film 116 having a nonwoven layer 112, 114 bonded on either side of the film 116 by a plurality of ultrasonic bond points 118. The bond points 118 of laminate 110 are made using a anvil roll (not shown) having a plurality of rounded nibs 120. The rounded nibs 120 have a flat land area 122 that occupies a much smaller percentage of the total bond area 125 compared to the prior art laminates made using the truncated cone shaped nibs 20. More particularly, while the laminates of Figure 3 also have a total bond area of approximately 7.0-7.3%, the flat land area occupies only about 1.9-2.2% of the total laminate area compared to the 6.3-6.5% of the prior art.

As seen in Figure 3, in addition to the lower flat land bond area, the transition area 128 between the bond point 124 and the nonwoven layers 112, 114 is much more gradual in the novel laminates. Furthermore, the bond points 124 lack the ridge or circumferential flange 26 seen in the prior art laminates. Accordingly, the novel laminates provide a greatly improved softness and tactile feel as compared to the prior art laminates of Figures 1 and 2.

The elastic film 116 used in the novel laminates can be a mono layer film or a multilayer film. The term "elastic" is used to connote a material that can be stretched in at least one direction to approximately 150% of its original dimension and, when the tension is released, will return to a dimension that is no greater than 125% of its original dimension. For example, a material that is one inch long is elastic if it can be stretched to 1.5 inches in length and will return to be no more than 1.25 inches when the tension is released and the material is allowed to relax.

If a multilayer film is used, it is preferable that the elastic film 116 be made in a coextrusion process, in which the elastic core and the one or more skin layers are extruded simultaneously from a die. Alternatively, processes such as extrusion coating could be used to produce a multilayer elastic film 12. Preferably the film 116 comprises a coextruded, multilayer film comprising an elastomeric core layer and at least one skin layer on either side of the core layer. It is to be understood that embodiments having more then one skin layer on each side of the elastic core are also contemplated and may be used to advantage.

The elastomeric core comprises natural or synthetic rubbers, such as isoprenes, butadiene-styrene materials, styrene block copolymers (e.g., styrene/isoprene/styrene (SIS), styrene/ butadiene/styrene (SBS), or styrene/ethylene-butadiene/styrene (SEBS) block copolymers) olefinic elastomers, polyetheresters, polyurethanes, and mixtures thereof. The skin layers, if used, can comprise any suitable material that is less elastic than the elastic core. Preferred materials are polyolefin polymers, specifically polyethylene polymers and copolymers, including metallocene-catalyzed polyethylene and blends of polyethylene polymers or copolymers. Other materials, such as vinyl acetate copolymers, may also be used to advantage if desired.

The term "polymer" includes homopolymers, copolymers, such as, for example, block, graft, random and alternating copolymers, terpolymers, etc., and blends and modifications thereof. Furthermore, unless otherwise specifically limited, the term "polymer" is meant to include all possible stereochemical configurations of the material, such as isotactic, syndiotactic and random configurations.

The relative thickness of the skin layers to the core layer in a multilayer elastic film can vary depending on the particular application and the desired properties. Preferred embodiments for a multilayer elastic film range from 5/90/5 to 15/70/15 by weight of skin/core/skin. The elastic film 116 may be embossed using a textured roller, as is known in the art, or may be made with a smooth surface using, for example, a vacuum box. The vacuum box imparts a partial vacuum to the elastic film 116 during the manufacturing process, drawing the film against a cast roll, and thus producing a film that is smoother and generally of a thinner gauge than those produced without a vacuum box.

As is known in the art, nonwoven webs are fibrous webs comprised of polymeric fibers arranged in a random or non-repeating pattern. For most of the nonwoven webs, the fibers are formed into a coherent web by any one or more of a variety of processes, such as spunbonding, meltblowing, bonded carded web processes, hydroentangling, etc., and/or by bonding the fibers together at the points at which one fiber touches another fiber or crosses over itself. The fibers used to make the webs may be a single component or a bi-component fiber as is known in the art and furthermore may be continuous or staple fibers. Mixtures of different fibers may also be used for the fibrous nonwoven fabric webs.

The nonwoven fabrics can be produced from any fiber-forming thermoplastic polymers including polyolefins, polyamides, polyesters, polyvinyl chloride, polyvinyl acetate and copolymers and blends thereof, as well as thermoplastic elastomers. Examples of specific polyolefins, polyamides, polyesters, polyvinyl chloride, and copolymers and blends thereof are illustrated above in conjunction with the polymers suitable for the film layer. Suitable thermoplastic elastomers for the fibrous layer include tri- and tetra-block styrenic block copolymers, polyamide and polyester based elastomers, and the like.

The thermoplastic fibers can be made from a variety of thermoplastic polymers, including polyolefins such as polyethylene and polypropylene, polyesters, copolyesters, polyvinyl acetate, polyamides, copolyamides, polystyrenes, polyurethanes and copolymers of any of the foregoing such as vinyl chloride/vinyl acetate, and the like. Suitable thermoplastic fibers can be made from a single polymer (monocomponent fibers), or can be made from more than one polymer (e.g., bicomponent fibers). For example, "bicomponent fibers" can refer to thermoplastic fibers that comprise a core fiber made from one polymer that is encased within a thermoplastic sheath made from a different polymer. The polymer comprising the sheath often melts at a different, typically lower, temperature than the polymer comprising the core. As a result, these bicomponent fibers provide thermal bonding due to melting of the sheath polymer, while retaining the desirable strength characteristics of the core polymer.

Bicomponent fibers can include sheath/core fibers having the following polymer combinations: polyethylene/polypropylene, polyethylvinyl acetate/polypropylene, polyethylene/polyester, polypropylene/polyester, copolyester/polyester, and the like. The bicomponent fibers can be concentric or eccentric, referring to whether the sheath has a thickness that is even, or uneven, through the cross-sectional area of the bicomponent fiber. Eccentric bicomponent fibers can be desirable in providing more compressive strength at lower fiber thicknesses.

In the case of thermoplastic fibers for carded nonwoven fabrics, their length can vary depending upon the particular melt point and other properties desired for these fibers. Typically, these thermoplastic fibers have a length from about 0.3 to about 7.5 cm long, preferably from about 0.4 to about 3.0 cm long. The properties, including melt point, of these thermoplastic fibers can also be adjusted by varying the diameter (caliper) of the fibers. The diameter of these thermoplastic fibers is typically defined in terms of either denier (grams per 9000 meters) or decitex (grams per 10,000 meters).

Depending on the specific arrangement within the structure, suitable thermoplastic fibers can have a decitex in the range from well below 1 decitex, such as 0.4 decitex, up to about 20 decitex.

Term "meltblown fibers" refers to fibers formed by extruding a molten thermoplastic material through a plurality of fine, usually circular, die capillaries as molten threads or filaments into a high velocity gas (e.g., air) stream that attenuates the filaments of molten thermoplastic material to reduce their diameter, which may be to a microfiber diameter. The term "microfibers" refers to small diameter fibers having an average diameter not greater than about 100 microns. Thereafter, the meltblown fibers are carried by the high velocity gas stream and are deposited on a collecting surface to form a web of randomly dispersed meltblown fibers.

The term "spunbonded fibers" refers to small diameter fibers that are formed by extruding a molten thermoplastic material as filaments from a plurality of fine, usually circular, capillaries of a spinneret with the diameter of the extruded filaments then being rapidly reduced as by, for example, eductive drawing or other well-known spunbonding mechanisms.

A particularly preferred nonwoven web is a heat consolidated web made in accordance with the process described in US RE 35,206, the disclosure of which is incorporated herein by reference. In such process, a nonwoven web is subjected to heat and tension to realign and orient the fibers of the web in the direction of stretching.

If desired, the novel laminates may be made breathable by any method known in the art. Processes to impart breathability include perforation, slitting and other techniques, such as hot needle perforation, die cutting, scoring, shearing, vacuum aperturing, or through the use of high pressure water jets.

Combinations of such methods may also be employed. Because the nonwoven webs are normally breathable, it may be desired to simply aperture the film prior to lamination. Apertured films are known in the art and can be made by mechanical perforation or vacuum aperturing or any other known processes for making breathable or air permeable films.

In some embodiments, the film may contain particulate filler dispersed in the polymer matrix. After the film is formed, stretching the film will pull the polymer matrix away from the particulates, creating microvoids in the film that permit transmission of water vapor by maintain the film's liquid impermeability. Microporous breathable films made by such a process are well known in the art.

The elastic film 116, the nonwoven webs 112, 114, or the finished laminate may be stretched or activated to improve the elastic properties of the laminates. For example, while the film and/ or the nonwovens may be made of elastomeric resins, the skin layers of the film, if present, and/or the nonwoven webs attached to the film tend to resist stretching. Accordingly, unless activated, the force needed to stretch the laminates may be considered too excessive for particular applications. Accordingly, as is customary in the art, it may be desired to stretch or activate the film 116 or the nonwovens 112, 114, or both, prior to ultrasonically bonding these webs together to form the laminate 110. Alternatively, or in addition, it may be desired to stretch or activate the laminate after the webs are ultrasonically bonded together.

The stretching or activation can be accomplished by any process known in the art, such as, but not limited to, (1) drawing the web in the machine direction through the use of two spaced apart pairs of rollers, wherein the downstream rollers are operating at a faster rotational speed than the upstream pair; (2) drawing the web in the cross-direction through the use of a tenter frame; (3) or intermeshing gear ("IMG") activation. Combinations of these processes may also be used.

IMG is a process in which a web is passed between a nip of rollers having a plurality of teeth oriented about the circumference of the rollers. As the rollers are brought together, the teeth intermesh. The web is gripped at the tooth and caused to stretch in the area between a pair of adjacent teeth. The teeth can be oriented along the machine direction, the cross-direction, or any angle there between, depending upon the desired orientation of elongation of the web after stretching. IMG activation is a well known process in the art of elastic laminates.

Any of the webs (which, as used herein includes the film layer) used in making the novel laminates may be processed, treated, finished or made to contain additives as is customary in the art. For example, the webs may include colorants, surfactants, slip agents, antistatic agents, or other additives of treatments as desired.

The laminates 110 may be produced to create so-called neck bonded laminates, stretch bonded laminates, neck-stretched bonded laminates, or zero strain stretch laminates. Neck bonded laminates are prepared by applying tension to one or both of the nonwoven layers and bonding the nonwoven and film together while the nonwoven is in a necked condition. A stretch bonded laminate is prepared by applying tension to the film and bonding one or more of the nonwoven layers to the film while the film is under tension. A neck-stretched bonded laminate is prepared by bonding the film and nonwoven together while both are held under tension. Zero strain stretch laminates are prepared by bonding the webs together while neither is under any appreciable tension. As is known in the art, activation is generally not required except for zero strain stretch laminates, but can nevertheless be employed regardless.

### Examples

Example 1 comprised a laminate made using a coextruded elastic film having a core of styrenic block copolymers and skin layers of polyethylene and a basis weight of 54 grams/ m². The film construction comprised 9/82/9 by weight of skin/ core/ skin. The film was ultrasonically bonded to two bicomponent spunbonded nonwoven fabrics (Dayuan NDYTB-BM020), one on either side of the film. Each nonwoven fabric had a basis weight of 20 grams/m². Ultrasonic bonding was accomplished using a "double dot" engraved steel anvil roll from Standex Corporation. The laminate has a total bond area of approximately 7% and a flat land bond area of approximately 2%.

Example 2 comprised a laminate made using a coextruded elastic film having a core of styrenic block copolymers and skin layers of polyethylene having a basis weight of 40 grams/ m². The film construction comprised 9/82/9 by weight of skin/ core/ skin. The film was ultrasonically bonded to two spunbonded nonwoven fabrics (Fiberweb Sofspan 120 NFPN 732D), one on either side of the film. Each nonwoven fabric had a basis weight of 20 grams/m². Ultrasonic bonding was accomplished using a "double dot" engraved steel anvil roll from Standex Corporation. The laminate has a total bond area of approximately 7% and a flat land bond area of approximately 2%.

The laminates were compared against two commercially available laminates FabriFlex™ 309 and FabriFlex™ 35102 (Tredegar Film Products Corporation, Richmond, VA). Each of the comparative laminates had a total bond area of about 7% and a flat land area of approximately 7%.

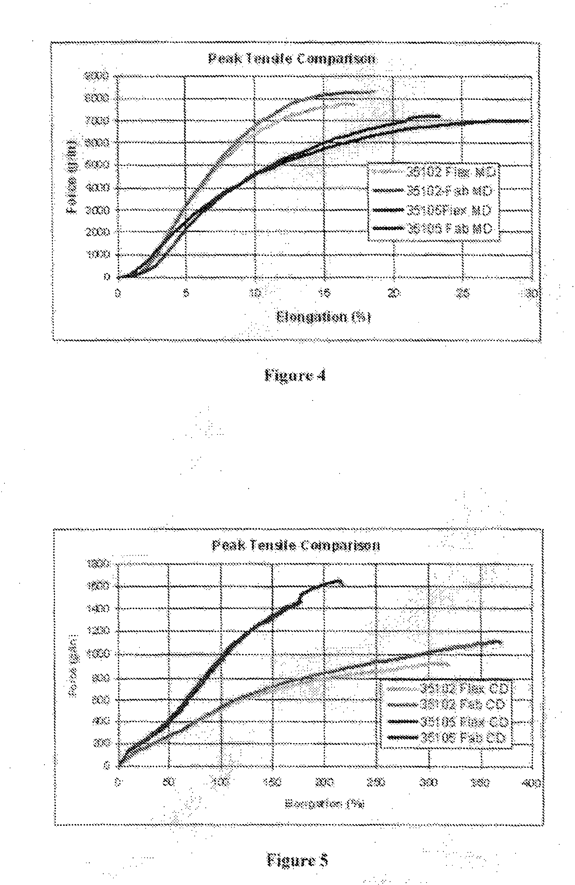

With reference to Figures 4 and 5, it can be seen from the data that the novel laminates compared favorably with the prior art laminates with regard to tensile strength and elastic properties (i.e., stretch and recovery). The data for the graphs in Figures 4 and 5 was generated by subjecting the laminates to the test procedure specified in ASTM 882. The laminates where compared for wound roll compressibility by winding the laminates onto finished rolls using constant tension. Loft of the laminates also evaluated using a procedure similar to that of ASTM D6571. In the loft evaluation, the laminates were stretched by hand under low load to approximately 80% elongation. Finally, the shear strength of the laminates was compared using well known test procedures.

Table 1 reports the results of the tests procedures. As seen from Table 1, the novel laminates were shown to have improved wound roll compressibility and increased softness as compared to the prior art laminates. Specifically, the novel laminates were shown to have improved compressibility, which permits more square meters of material to be wound on a roll without increasing the finished roll diameter and without negatively impacting laminate properties or performance. This is beneficial in that it results in fewer changeovers in the manufacture of final products using the laminates and also results in lower shipping costs and less waste. In addition, the novel laminates were shown to have increased loft after stretching. The interrelationship between loft and softness (as perceived from a compressibility sensation as opposed to a stroking sensation) is well documented in the prior art (see, e.g., US 4,725,473; US 5,470,640; and US 5,288,348). Thus the increased loft is perceived by the consumer as an improvement in softness of the laminates. Finally, Table 1 demonstrates that these improvements in roll compressibility and softness/ loft are obtained without sacrificing bond strength.

**Table 1**

| Example | Wound roll compressibility (percent increase over comparative) | Softness/ loft increase after stretch (percent) | Shear bond (kg) |
|---|---|---|---|
| Comparative Example 1 | N/A | 152.1 | 1.446 |
| Example 1 | 6.0 | 254.7 | 1.378 |
| Comparative Example 2 | N/A | 53.3 | 2.430 |
| Example 2 | 13.1 | 143.6 | 2.464 |

## Claims

1. A laminate having an elastic film and a nonwoven fabric ultrasonically bonded to each side of the film, said laminate comprising no more than about 2.2% flat land bond area, wherein the flat land bond area comprises less than about 30% of a total bond area.

2. The laminate of claims 1, said laminate having about 7.0-7.3% total bond area.

3. The laminate of any of claims 1-2, wherein each nonwoven fabric is independently selected from spunbonded, carded and spunlaced nonwoven webs.

4. The laminate of any of claims 1-3, wherein at least one nonwoven fabric is a bicomponent nonwoven.

5. The laminate of any of claims 1-4, wherein the elastic film is a coextruded multilayer film.

6. The laminate of claim 5, wherein said elastic film contains an elastomer selected from styrene block copolymer and olefin block copolymer.

7. The laminate of any of the preceding claims, comprising a zero strain stretch laminate.

8. The laminate of any of the preceding claims, wherein said laminate is breathable.

9. The laminate of any of the preceding claims, wherein said elastic film is activated.

10. A method comprising:
a. ultrasonically bonding an elastic film to a nonwoven fabric on either side of said film;
b. wherein said ultrasonic bonding produces no more than about 2.2% flat land bond area, and wherein the flat land bond area comprises less than about 30% of a total bond area.

11. The method of claim 10, wherein said film is activated prior to bonding.

12. The method of claim 10, wherein said laminate is activated after bonding.

13. The method of any of claims 11-12, wherein said bonding step occurs while both the film and the nonwoven fabrics are under substantially zero tension.

## Patentansprüche

1. Laminat, das einen elastischen Film und einen Vliesstoff aufweist, der mittels Ultraschall mit jeder Seite des Films verbunden ist, wobei das Laminat nicht mehr als ungefähr 2.2% eines Flachlandverbundbereichs umfasst, wobei der Flachlandverbundbereich weniger als ungefähr 30% eines Gesamtverbundbereichs umfasst.

2. Laminat nach Anspruch 1, wobei das Laminat ungefähr 7.0 bis 7.3% Gesamtverbundbereich aufweist.

3. Laminat nach einem der Ansprüche 1 bis 2, wobei jeder Vliesstoff unabhängig ausgewählt ist aus Spinnvliesstoffen, kardierten Vliesstoffen und wasserstrahlverfestigten Vliesstoffen.

4. Laminat nach einem der Ansprüche 1 bis 3, wobei zumindest ein Vliesstoff ein Zweikomponenten-Vliesstoff ist.

5. Laminat nach einem der Ansprüche 1 bis 3, wobei der elastische Film ein coextrudierter Mehrschichtfilm ist.

6. Laminat nach Anspruch 5, wobei der elastische Film ein Elastomer beinhaltet, das ausgewählt ist aus einem Styrol-Block-Copolymer und einem Olefin-Block-Copolymer.

7. Laminat nach einem der vorangegangenen Ansprüche, umfassend ein Null-Belastung-Stretchlaminat umfasst.

8. Laminat nach einem der vorangegangenen Ansprüche, wobei das Laminat atmungsaktiv ist.

9. Laminat nach einem der vorangegangenen Ansprüche, wobei der elastische Film aktiviert ist.

10. Verfahren, umfassend:
a. Verbinden, mittels Ultraschall, eines elastischen Films mit einem Vliesstoff auf beiden Seiten des Films;
b. wobei das Verbinden mittels Ultraschall nicht mehr als ungefähr 2.2% eines Flachlandverbundbereichs erzeugt, wobei der Flachlandverbundbereich weniger als ungefähr 30% eines Gesamtverbundbereichs umfasst.

11. Verfahren nach Anspruch 10, wobei der Film vor dem Verbinden aktiviert wird.

12. Verfahren nach Anspruch 10, wobei das Laminat nach dem Verbinden aktiviert wird.

13. Verfahren nach einem der Ansprüche 11 bis 12, wobei der Verbindungsschritt erfolgt während sowohl der Film als auch die Vliesstoffe im Wesentlichen unter keiner Spannung stehen.

## Revendications

1. Stratifié ayant un film élastique et un tissu non-tissé fixé par ultrasons de chaque côté du film, le stratifié ne comprenant pas plus qu'environ 2,2 % de surface de fixation en plage plate, la surface de fixation en plage plate constituant moins qu'environ 30 % d'une surface de fixation totale.

2. Stratifié selon la revendication 1, le stratifié ayant environ 7,0 à 7,3 % de surface de fixation totale.

3. Stratifié selon l'une quelconque des revendications 1 ou 2, dans lequel chaque tissu non-tissé est sélectionné de manière indépendante à partir de bandes de non-tissé filé, cardé et entrelacé.

4. Stratifié selon l'une quelconque des revendications 1 à 3, dans lequel au moins un tissu non-tissé est un non-tissé à deux composants.

5. Stratifié selon l'une quelconque des revendications 1 à 4, dans lequel le film élastique est un film multicouche co-extrudé.

6. Stratifié selon la revendication 5, dans lequel le film élastique contient un élastomère sélectionné parmi un copolymère bloc de styrène et un copolymère bloc d'oléfine.

7. Stratifié selon l'une quelconque des revendications précédentes, comprenant un stratifié en stretch à contrainte nulle.

8. Stratifié selon l'une quelconque des revendications précédentes, dans lequel le stratifié est respirant.

9. Stratifié selon l'une quelconque des revendications précédentes, dans lequel le film élastique est activé.

10. Procédé consistant à :
a. fixer par ultrasons un film élastique sur un tissu non-tissé de chaque côté du film ;
b. dans lequel la fixation par ultrasons ne produit pas plus qu'environ 2,2 % de surface de fixation de plage plate, et la surface de fixation de plage plate constituant moins qu'environ 30 % d'une surface de fixation totale.

11. Procédé selon la revendication 10, dans lequel le film est activé avant fixation.

12. Procédé selon la revendication 10, dans lequel le stratifié est activé après fixation.

13. Procédé selon l'une quelconque des revendications 11 et 12, dans lequel l'étape de fixation a lieu alors qu'à la fois le film et les tissus non-tissés sont sensiblement sous une traction nulle.
